# EUROPÄISCHE PATENTSCHRIFT

(11) **EP 2 459 921 B1**
(45) Veröffentlichungstag und Bekanntmachung des Hinweises auf die Patenterteilung: **28.05.2014**
(21) Anmeldenummer: 11701661.8
(22) Anmeldetag: 27.01.2011
(51) Int. Cl.: F16M 11/04, G03B 17/56

(54) **L-FÖRMIGER HALTER FÜR OPTISCHE GERÄTE**
L-SHAPED HOLDER FOR OPTICAL DEVICES
SUPPORT EN L POUR APPAREILS OPTIQUES

(30) Priorität: 24.02.2010 DE 202010002724 U
(43) Veröffentlichungstag der Anmeldung: 06.06.2012
(73) Patentinhaber: Vogt, Philippe, 70190 Bussieres (FR)
(72) Erfinder: Vogt, Philippe, 70190 Bussieres (FR)
(74) Vertreter: Moser & Götze
(86) Internationale Anmeldenummer: PCT/EP2011/051165
(87) Internationale Veröffentlichungsnummer: WO 2011/104063

(56) Entgegenhaltungen:
- US-A- 6 042 277
- US-A1- 2006 177 215
- US-B1- 6 663 299
- Really Right Stuff: "Catalogue 2009"[Online] 2009, Seiten 1-72, XP002624932 Internet Gefunden im Internet: URL:http://reallyrightstuff.com/mmRRS/Othe rs/ReallyRightStuff2009.pdf>

## Beschreibung

Die Erfindung betrifft einen L-förmigen Halter für optische Geräte, insbesondere für Kameras.

Solche L-Halter, oder auch V-Halter genannt, sind an sich bekannt und umfassen einen Halter, der an Kameras über das üblicherweise vorhandene Stativgewinde angeschraubt wird und eine L-Form bzw. V-Form aufweist. Der eine bzw. lange Steg des L bzw. V wird dabei unter die Kamera geschraubt und der andere bzw. kurze Steg des L bzw. V umgreift das Kameragehäuse seitlich, wobei die Kameragehäuseecke in dem Knick des L bzw. V liegt. Nachfolgend wird zur Vereinfachung durchgehend der Begriff L-Halter verwendet werden, wobei klar ist, dass beide Versionen unter den Begriff fallen sollen.

Die L-Halter sind an den beiden Stegen des L mit in Längsrichtung verlaufenden Nuten versehen, analog den sogenannten Schnellwechselplatten, so dass die Kamera wahlweise quer- oder hochkant auf einem Stativkopf in einer Schnellspanneinrichtung etc. befestigbar ist. Die Nuten bzw. Schnellwechselplatten erlauben also den schnellen und einfachen Wechsel der Kamera und ihrer Ausrichtung am Stativ bzw. Stativkopf. Somit wird bei einer Änderung der Kameraausrichtung eine Änderung der Stativeinstellung oder dessen Kopfes nicht notwendig.

Ohne eine solche Möglichkeit müsste die Kamera am Stativkopf selbst geschwenkt werden bzw. dieser auf die Seite gelegt werden. Hierdurch würde sich jedoch unweigerlich die Einstellung des Bildes vollständig ändern, so dass alle Einstellung am Stativ geändert werden müssten.

Auch wird durch einen L-Halter eine zentrale Anordnung der Kamera in Relation zum Stativkopf sowohl in der quer- als auch die hochkant Ausrichtung der Kamera ermöglicht. Dies ist wichtig, da nur in einer zentralen Anordnung die beste Stabilität des Stativs bzw. des Stativkopfes und dessen schwingungsdämpfende Eigenschaften gegeben sind.

Im Regelfall ist es sogar so, dass man mit einem solchen L-Halter exakt über dem Stativmittelpunkt arbeitet, was zusätzliche Verwacklungssicherheit bietet.

Allerdings sind die bekannten L-Halter einstückige Metall- oder Kunststoffwinkel, die praktisch keine Verstell- oder Justiermöglichkeiten an der Kamera erlauben und zudem für jedes Kameramodell spezifisch angepasst sind.

Demgegenüber besteht die Aufgabe der vorliegenden Erfindung daher darin, einen L-Halter für optische Geräte, insbesondere Kameras bereitzustellen, mit dem die Anschlüsse der optischen Geräte nicht verdeckt werden und der zudem noch verstell- und justierbar ist. Zusätzlich sollte der L-Halter an üblichen Stativköpfen einfach und schnell befestigbar sein. Weiterhin wäre es wünschenswert, wenn der L-Halter für eine große Palette von optischen Geräten bzw. Kameramodellen universell einsetzbar wäre.

Diese Aufgabe wird durch den im Anspruch 1 wiedergegebenen L-Halter für optische Geräte, insbesondere Kameras gelöst.

Dadurch, dass die Wechselplatten derart mit dem Verbinder verbunden sind, dass die Wechselplatten auf dem Verbinder verschiebbar sind, ist es möglich, einen L-förmigen Halter für optische Geräte, insbesondere Kameras bereitzustellen mit dem die Anschlüsse der optischen Geräte nicht verdeckt werden, da über die Verschiebung der Wechselplatten an dem Verbinder genügend Abstand erreichbar ist, um Platz für die Anschlüsse und Kabel zu erreichen, und der zudem noch verstell- und justierbar ist, so dass er für eine große Palette von optischen Geräten bzw. Kameramodellen universell einsetzbar, da er über die Verschiebung der Wechselplatten an die jeweilige Gehäusegröße anpassbar ist. Zusätzlich ist der L-Halter an üblichen Stativköpfen einfach und schnell über die Wechselplatten befestigbar.

Ein weiterer Vorteil dieses Aufbaus ist, dass für normale horizontale Fotografien nicht immer der gesamte L-Halter verwendet werden muss, sondern es kann der Verbinder samt zweiter Wechselplatte abgezogen werden.

Die Wechselplatten können also auf ihrem jeweiligen Steg des "L" (bzw. V) einerseits zwischen dem Ende des Stegs und der Abwinklung zwischen den Stegen verschoben, aber auch insgesamt abgezogen werden.

Unter Kamera wird vorliegend eine fototechnische Apparatur verstanden, die statische oder bewegte Bilder auf einem fotografischen Film oder elektronisch auf ein magnetisches Videoband oder digitales Speichermedium aufzeichnen kann.

Wenn der Verbinder zwei miteinander verstrebte, parallel verlaufende und abgewinkelte Stäbe umfasst, können die Kabelverbindungen zu den Anschlüssen, wie sie insbesondere bei digitalen Spiegelreflexkameras üblich sind, zwischen den Metallstäben durchgesteckt werden und es ergibt sich zudem eine einfache und leichte Bauweise.

Denkbar ist auch die Verwendung eines einzelnen Stabes oder Profilstabes.

Vorzugsweise bestehen die Stäbe aus Metall. Denkbar ist jedoch auch die Verwendung von armiertem Kunststoff. Besonders bevorzugt ist es, wenn die Stäbe Rundstäbe sind.

Sinnvoll ist es, wenn die Wechselplatten in Längsrichtung verlaufende Nuten aufweisen, so dass sie analog zu den Schwalbenschwanzplatten verwendbar sind. Somit sind diese mit den auf dem Markt befindlichen Schnellwechselsystemen verwendbar.

Die Verschiebbarkeit kann am einfachsten erreicht werden, wenn der Verbinder an beiden Enden in die Wechselplatten eingeschoben werden kann und dann fixierbar ist.

Dazu ist es sinnvoll, wenn die Wechselplatten Aufnahmen, insbesondere Bohrungen, für den Verbinder bzw. dessen Stäbe aufweisen, und wenn die Wechselplatten eine lösbare Verrieglung für das Fixieren des Verbinders umfassen.

Die Verriegelung wird erreicht, in dem in die Aufnahmen eingeschobenen Stäbe des Verbinders fixierend geklemmt werden. Hierzu ist es bevorzugt, wenn die Stäbe an die Wände der Aufnahme angedrückt werden bzw. der Querschnitt der Aufnahmen verringert wird. Dazu kann eine Schraube vorgesehen sein, die eine Druckplatte, die ggf. einen Keilförmigen Querschnitt hat, gegen die Stäbe in den Aufnahmen zum verriegeln bzw. fixieren "zieht".

In einer bevorzugten Ausführungsform kann es vorgesehen sein, dass die Wechselplatten jeweils mit einer zusätzlichen Schwalbenschwanzplatte kombiniert sind, die an der Unter- oder Oberseite angeordnet ist. Dann ist es sogar möglich, dass die Schraube für die Druckplatte durch Verdrehen der Schnellwechselplatte gegenüber dem Verbinder verdrehbar ist.

In einer weiteren bevorzugten Ausführungsform weisen die Wechselplatten an ihrer Ober- oder Unterseite ein Schnellspannsystem auf. Vorzugsweise ist diese als Schnellspannsystem ausgebildet, das noch um 90 Grad gedreht an der Wechselplatte befestigbar und fixierbar ist. Diese kann auch so angeordnet sein, dass die Kamera gegenüber dem an einem Stativkopf fixierten L-Halter gedreht werden kann, ohne dass sich ihr Niveau ändert. Dann ist es möglich, eine kleine übliche universal Schnellwechselplatte an der Kamera zu belassen bzw. vorzusehen und über diese die Kamera mittels des Schnellspannsystems dafür an dem L-Halter anzubringen, wobei die Ausrichtung der üblichen Schnellwechselplatte an Kamera keine Rolle spielt, da ja das Schnellspannsystem gedreht werden kann.

Weitere Einzelheiten, Merkmale und Vorteile der Erfindung ergeben sich aus der nachfolgenden Beschreibung von Ausführungsbeispielen anhand der Zeichnung, in der
Fig. 1 eine perspektivische Ansicht einer ersten Ausführungsform eines L-Halters zeigt;
Fig. 2 eine perspektivische Ansicht des L-Halters aus Figur 1 mit abgezogener erster Wechselplatte zeigt;
Fig. 3 eine perspektivische Ansicht einer zweiten Ausführungsform eines L-Halters zusätzlich mit Schnellspannsystem und Schwalbenschwanzplatten zeigt und
Fig. 4 eine perspektivische Ansicht des L-Halters aus Figur 3 unter Andeutung der Verdrehung des Schnellspannsystems zeigt.

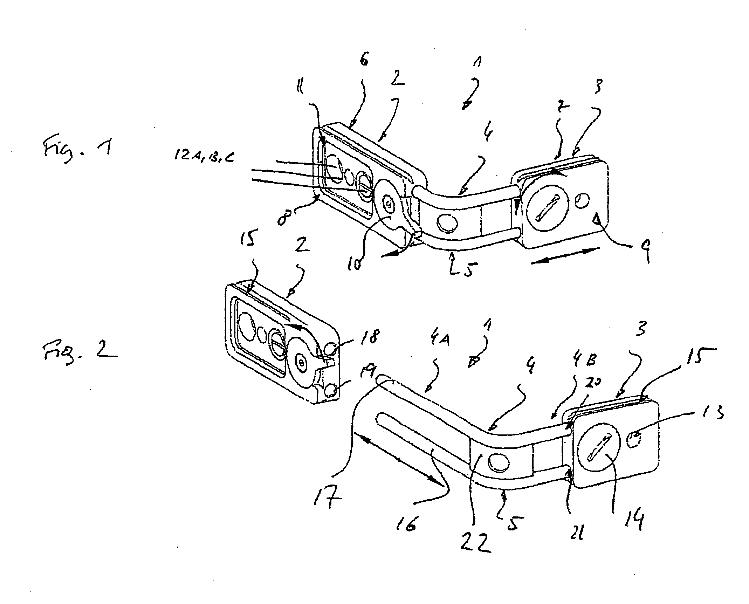

In den Figuren 1 und 2 ist ein L-Halter 1 für Spiegelreflexkameras mit einer an dem Gehäuse der Kamera über eine Schraube befestigbare erste größere Wechselplatte 2, mit einer zweiten kleineren Wechselplatte 3 und einem Verbinder 4 mit zwei durch eine Abwinklung 5 getrennten Stegen 4A,B zur Verbindung der beiden Wechselplatten 2,3 gezeigt.

Jede Wechselplatte 2, 3 ist an einem der Stege 4A, B des Verbinders angeordnet und in Richtung der Doppelpfeile auf dem Verbinder bzw. dem jeweiligen Steg 4A für die erste Wechselplatte 2 und 4B für die zweite Wechselplatte 3 verschiebbar und sogar abziehbar (vgl. Figur 2).

Die Kamera wird also an der ersten größeren Wechselplatte 2 angeschraubt und der L-Halter über die Verschiebung der Wechselplatte 2 zur Abwinklung 5 und der zweiten Wechselplatte 3 zur Abwinklung 5 des Verbinders auf die Kamera eingestellt.

Die Wechselplatten 2, 3 sind im Wesentlichen flache Metallplatten mit einer planen Oberseite 6, 7 für die Anlage an der Kamera.

An der Unterseite 8 der ersten Wechselplatte 2 ist neben einem Verriegelungshebel 10 noch eine Aussparung 11 mit drei Bohrungen 12A, B, C für die wahlweise Aufnahme und Anordnung einer Befestigungsschraube für die Kamera.

An der Unterseite 9 der zweiten Wechselplatte 3 sind lediglich eine Bohrung 13 und ebenfalls eine Verriegelungsschraube 14 angeordnet.

An den Längsseiten weisen beide Wechselplatten 2, 4 in Längsrichtung verlaufende Nuten 15 auf, die eine Verwendung der Wechselplatten 2, 3 analog einer Schwalbenschwanzschnellwechselplatte erlauben.

Der Verbinder 4 besteht aus zwei miteinander verstrebten, parallel verlaufenden und abgewinkelte Rundstäben 16, 17, die im Bereich der Abwinkling 5 mit einer gelochten Platte 22 verstrebt sind.

In den Wechselplatten 2, 3 sind in den Stirnseiten Bohrungen 18, 19 bzw. 20, 21 für die Aufnahme der Rundstäbe 16, 17 vorgesehen, die durch die Wechselplatten 2, 3 hindurch gehen. Dies erlaubt die Verschiebung der Wechselplatten 2,3 auf dem Verbinder 4.

Um die Wechselplatten 2, 3 an der gewünschten Position auf dem Verbinder 4 zu fixieren bzw. festzulegen, ist in jeder Platte 2, 3 eine lösbare Verrieglung vorgesehen, die über den entsprechenden Hebel 10 bzw. Schraube 14 betätigbar ist.

Bei einem Verdrehen des Hebels 10 bzw. der Schraube 14 wird jeweils eine an der in der Figur 1 und abgewandten Seite der Wechselplatten 2,3 gelegene Druckplatte gegen die Rundstäbe 16, 17 in den Bohrungen 18, 19 bzw. 20, 21 gedrückt, so dass diese fixierend in den Bohrungen jeweils geklemmt werden.

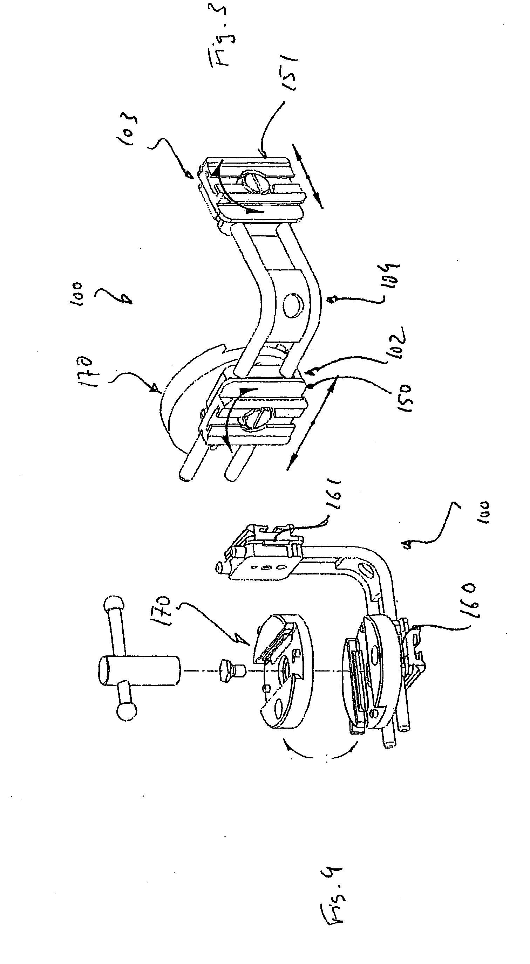

Die in den Figuren 3 und 4 gezeigte zweite Ausführungsform des L-Halters 100 entspricht im Wesentlichen der vorherigen, so dass sich entsprechende um 100 erhöhte Bezugszeichen verwendet werden.

Sie unterscheidet sich im von der vorherigen allerdings dadurch, dass diese identische kleine Wechselplatten 102, 103 aufweist, die zudem jeweils mit einer Schwalbenschwanzplatte 150, 151 an ihrer der Kamera abgewandten Unterseite 108, 109 kombiniert sind.

Mit diesen Schwalbenschwanzplatten 150, 151 kann der L-Halter 100 an einem handelsüblichen Schnellwechselsystem wahlweise befestigt werden.

Als weitere Besonderheit erfolgt die Betätigung der Verriegelung bzw. Fixierung der Wechselplatten 102, 103 am Verbinder 104 bei dem zweiten L-Halter 100 über ein Verdrehen der Schwalbenschwanzplatten 150, 151, so dass eine entsprechende Schraube die entsprechende Druckplatte betätigen kann.

Damit die Schwalbenschwanzplatten 150, 151 immer im rechten Winkel zu den Wechselplatten 102, 103 ausgerichtet sind, weisen die Schwalbenschwanzplatten 150, 151 Vorsprünge 160, 161 auf, mit denen sie an den Längs- bzw. Querseiten der Wechselplatten 102, 103 anliegen.

Als weitere Besonderheit umfasst der zweite L-Halter 100 an der Oberseite 106 der Wechselplatte 102 ein Schnellspannsystem 170, das an der Wechselplatte verschraubt ist, und wahlweise um 90 Grad drehbar befestigt werden kann, so dass die Ausrichtung einer Schnellwechselplatte an der Kamera egal ist.

Das Schnellspannsystem 170 dient dazu, Spiegelreflexkameras über Adapter- oder Schnellwechselplatten an dem L-Halter variabel zu fixieren, wobei dies derart vollzogen wird, dass die Adapterplatte an der Kamera angeschraubt und die Adapterplatte an einer Führung an der Grundplatte am Schnellspannsystem lösbar fixiert wird. Dazu wird üblicherweise die Adapterplatte in der Führung eingeklemmt, wozu die gegenüberliegenden Seiten der Führung relativ zu einander beweglich ausgeführt sind. Der Klemmvorgang wird über eine Schraube oder einen Hebel durchgeführt, die entsprechend den Abstand der Teile der Führung zum Fixieren verringern bzw. zum Lösen vergrößern. Somit ist es möglich zwischen unterschiedlichen Kameras, die jeweils eine entsprechende Adapterplatte aufweisen, schnell zu wechseln, ohne den L-Halter an dem Stativkopf in seiner Ausrichtung etc. zu ändern.

### Bezugszeichenliste

- 1: L-Halter
- 2: Wechselplatte
- 3: Wechselplatte
- 4: Verbinder
- 4A, B: Steg
- 5: Abwinklung
- 6, 7: Oberseite
- 8, 9: Unterseite
- 10: Verriegelungshebel
- 11: Aussparung
- 12A, B, C: Bohrung
- 13: Bohrung
- 14: Verriegelungsschraube
- 15: Nuten
- 16, 17: Rundstab
- 18, 19, 20, 21: Bohrung
- 22: Platte

- 100: L-Halters
- 102: Wechselplatte
- 103: Wechselplatte
- 104: Verbinder
- 108, 109: Unterseite
- 150, 151: Schwalbenschwanzplatte
- 160, 161: Vorsprung
- 170: Schnellspannsystem

## Patentansprüche

1. L-Halter für optische Geräte, insbesondere Kameras, mit einer an dem Gehäuse des optischen Geräts über eine Schraube befestigbare erste Wechselplatte (2), mit einer zweiten Wechselplatte (3) und einem Verbinder (4) mit zwei durch eine Abwinklung (5) getrennten Stegen (4A, 4B) zur Verbindung der beiden Wechselplatten, wobei jede Wechselplatte an einem der Stege des Verbinders angeordnet ist,
**dadurch gekennzeichnet, dass** die Wechselplatten derart mit dem Verbinder verbunden sind,
dass die Wechselplatten auf dem Verbinder verschiebbar sind, der Verbinder zwei miteinander verstrebte, parallel verlaufende und abgewinkelte Stäbe (16, 17) umfasst die Wechselplatten Aufnahmen (18, 19, 20, 21) insbesondere Bohrungen, für die Aufnahme einer Seite des Verbinders aufweisen und die Wechselplatten eine lösbare Verrieglung (10, 14) für das Fixieren des Verbinders aufweisen.

2. L-Halter nach Anspruch 1, **dadurch gekennzeichnet, dass** die Stäbe aus Metall bestehen.

3. L-Halter nach Anspruch 1 oder 2, **dadurch gekennzeichnet, dass** die Stäbe Rundstäbe sind.

4. L-Halter nach einem der vorhergehenden Ansprüche, **dadurch gekennzeichnet, dass** die Wechselplatten seitlich in Längsrichtung verlaufende Nuten (15) aufweisen.

5. L-Halter nach einem der vorhergehenden Ansprüche, **dadurch gekennzeichnet, dass** die Wechselplatten an ihrer Ober- oder Unterseite eine Schwalbenschwanzplatte (150, 151) aufweisen.

6. L-Halter nach einem der vorhergehenden Ansprüche, **dadurch gekennzeichnet, dass** Wechselplatten an ihrer Ober- oder Unterseite ein Schnellspannsystem (170) aufweisen.

7. L-Halter nach Anspruch 5 oder 6, **dadurch gekennzeichnet, dass** die Schwalbenschwanzplatten und/oder das Schnellspannsystem um 90 Grad drehbar sind.

## Claims

1. L-shaped holder for optical devices, in particular cameras, having a first change plate (2) which can be attached to the housing of the optical device via a screw, having a second change plate (3) and a connector (4) with two limbs (4A, 4B) separated by a bend (5), for connecting the two change plates, wherein each change plate is disposed on one of the limbs of the connector,
**characterised in that**
the change plates are connected to the connector such that the change plates can be displaced on the connector, the connector includes two rods (16, 17) which are braced together, extend in parallel and are bent, the change plates have receivers (18, 19, 20, 21), in particular bores, to receive one side of the connector, and the change plates have a releasable locking arrangement (10, 14) for fixing the connector.

2. L-shaped holder as claimed in claim 1, **characterised in that** the rods consist of metal.

3. L-shaped holder as claimed in claim 1 or 2, **characterised in that** the rods are round rods.

4. L-shaped holder as claimed in any one of the preceding claims, **characterised in that** the change plates comprise grooves (15) extending laterally in the longitudinal direction.

5. L-shaped holder as claimed in any one of the preceding claims, **characterised in that** the change plates comprise a dovetail plate (150, 151) on their upper or lower side.

6. L-shaped holder as claimed in any one of the preceding claims, **characterised in that** the change plates comprise a quick-clamping system (170) on their upper or lower side.

7. L-shaped holder as claimed in claim 5 or 6, **characterised in that** the dovetail plates and/or the quick-clamping system can be rotated by 90 degrees.

## Revendications

1. Support en L pour appareils optiques, notamment pour appareils photographiques, ledit support comportant une première plaque de changement (2) qui peut être fixée au boîtier de l'appareil optique au moyen d'une vis, une seconde plaque de changement (3) et un élément de liaison (4) doté de deux branches (4A, 4B) séparées par un coude (5) et destinées à relier les deux plaques de changement, chaque plaque de changement étant disposée sur l'une des branches de l'élément de liaison,
**caractérisé en ce que**
les plaques de changement sont reliées à l'élément de liaison de telle sorte que les plaques de changement sont aptes à coulisser sur l'élément de liaison, **en ce que** l'élément de liaison comporte deux tiges (16, 17) coudées, s'étendant en parallèle et entretoisées l'une à l'autre, **en ce que** les plaques de changement comportent des logements (18, 19, 20, 21), notamment des perçages, destinés à recevoir un côté de l'élément de liaison et les plaques de changement comportent un élément de verrouillage libérable (10, 14) destiné à fixer l'élément de liaison.

2. Support en L selon la revendication 1, **caractérisé en ce que** les tiges sont en métal.

3. Support en L selon la revendication 1 ou 2, **caractérisé en ce que** les tiges sont des tiges rondes.

4. Support en L selon l'une quelconque des revendications précédentes, **caractérisé en ce que** les plaques de changement comportent des gorges (15) qui s'étendent latéralement dans la direction longitudinale.

5. Support en L selon l'une quelconque des revendications précédentes, **caractérisé en ce que** les plaques de changement comportent sur leur face supérieure ou inférieure une plaque en queue d'aronde (150, 151).

6. Support en L selon l'une quelconque des revendications précédentes, **caractérisé en ce que** les plaques de changement comportent sur leur côté supérieur ou inférieur un système à serrage rapide(170).

7. Support en L selon la revendication 5 ou 6, **caractérisé en ce que** les plaques en queue d'aronde et/ou le système à serrage rapide sont aptes à tourner sur 90 degrés.
